Europäisches Patentamt

European Patent Office

Office européen des brevets

(11) Veröffentlichungsnummer : **0 066 132 B1**

(12) **EUROPÄISCHE PATENTSCHRIFT**

(45) Veröffentlichungstag der Patentschrift :
21.11.85

(21) Anmeldenummer : 82104125.8

(22) Anmeldetag : 12.05.82

(51) Int. Cl.⁴ : **G 01 F 11/10, G 07 F 13/02**

(54) Flüssigspeisenspender.

(30) Priorität : 26.05.81 DE 3120879

(43) Veröffentlichungstag der Anmeldung :
08.12.82 Patentblatt 82/49

(45) Bekanntmachung des Hinweises auf die Patenterteilung : 21.11.85 Patentblatt 85/47

(84) Benannte Vertragsstaaten :
AT BE CH DE FR GB IT LI LU NL SE

(56) Entgegenhaltungen :
FR-A-   451 649
FR-A-   501 682
FR-A- 1 131 632
FR-A- 1 286 650
GB-A-   324 483
GB-A-   975 338
US-A- 1 634 374

(73) Patentinhaber : Harmatzy-Simon, Bela
Nestorstrasse 11
D-1000 Berlin 31 (DE)

Schröder, Peter
Bergstrasse 96
D-5068 Odenthal-Glöbusch (DE)

Büchel, Helga
Semmelweisstrasse 159
D-5000 Köln 80 (DE)

(72) Erfinder : Harmatzy-Simon, Bela
Nestorstrasse 11
D-1000 Berlin 31 (DE)
Erfinder : Schröder, Peter
Bergstrasse 96
D-5068 Odenthal-Glöbusch (DE)
Erfinder : Büchel, Arnold
Verstorben (DE)

(74) Vertreter : Selting, Günther, Dipl.-Ing. et al
Deichmannhaus am Hauptbahnhof
D-5000 Köln 1 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

In der Großverpflegung, wie zum Beispiel in der Gastronomie — in Betriebsrestaurants, in Kantinen und in der Schul- und Anstaltsverpflegung, wird durch die Selbstbedienungsanlagen der Bedarf an hygienisch einwandfrei arbeitenden Selbstportionier-Einrichtungen für Zutaten und Speisen stets größer.

Aus FR-A-1 131 632 ist eine Schöpfeinrichtung bekannt, bei der ein zylindrischer Schöpfbecher, der an dem Ende eines schwenkbar angebrachten rohrförmigen Schöpfarmes befestigt ist, einen Schlitz aufweist. Durch den Schlitz kann Flüssigkeit in den Schöpfbecher eintreten, wenn dieser in die Flüssigkeit, die in das Gehäuse des Flüssigkeitsspenders eingefüllt worden ist, eintaucht. Beim Hochschwenken des Schöpfarmes sinkt die Flüssigkeit aus dem Schöpfbecher in den rohrförmigen Schöpfarm ab und läuft durch diesen hindurch zu einem Auslaß. Ein derartiger Flüssigkeitsspender ist nur zur dosierten Ausgabe von Flüssigkeiten geeignet, die keine festen Bestandteile enthalten. Festbestandteile würden überhaupt nicht in den schmalen Schlitz des Schöpfbehälters eindringen, sondern beim Hochschwenken von diesem verdrängt werden. Der Schöpfbehälter wirkt wie ein Strömungskörper, der die Flüssigkeit durchschneidet und Feststoffe beiseite schiebt. Solche Feststoffe, die dennoch in den Schöpfbehälter hineindringen, würden den rohrförmigen Schöpfarm, der sich zum Auslaßende verjüngt, verstopfen.

Ein in US-A-1 634 374 beschriebener Flüssigkeitsspender für Getränke enthält einen in die Flüssigkeit eintauchenden Schöpfbecher, dessen Boden und dessen Rückwand abgerundet sind. Beim Anheben des Schöpfbechers wird dieser verschwenkt, so daß die Flüssigkeit außerhalb des Reservoirs aus dem vorne offenen Becherende ausläuft. Eine Auslaufrinne ist hierbei nicht vorgesehen.

In FR-A-501 682 ist ein Flüssigkeitsspender mit einem rotierenden Kreuz vorgesehen, an dessen Enden Rundgefäße befestigt sind. Schließlich ist aus GB-A-975 338 eine Flüssigkeitsausgabevorrichtung bekannt, bei der Schöpfbecher und Reservoirs zum Reinigen herausgenommen und ersetzt werden können. Ein Herausnehmen durch die rückwärtige Gehäusewand ist aber nicht möglich, weil diese Wand geschlossen ist. Separat von den Schöpfbechern angeordnete Auslaufrinnen sind nicht vorhanden, vielmehr sind an den Schöpfbechern rohrförmige, sich verjüngende Stutzen angebracht, durch die die Flüssigkeit auslaufen kann.

Die bekannten Flüssigkeitsspender eignen sich lediglich zum Portionieren von homogenen Flüssigkeiten ohne Feststoffe. Wenn Feststoffe in der Flüssigkeit enthalten sind, neigen diese Feststoffe dazu, sich am Boden abzusetzen, was unerwünscht ist.

Die Erfindung betrifft einen Flüssigspeisenspender für die Abgabe einer definierten Menge Flüssigspeise, mit einem die Flüssigspeise aufnehmenden Gehäuse, in welchem eine Welle gelagert ist, an der ein Schöpfarm mit einem Schöpfbecher und einem außenliegenden Betätigungshebel angebracht ist, und mit einer über einem Auslauf endenden Transportrutsche, in die sich der Inhalt des Schöpfbechers entleert, wobei die Länge und Form des Schöpfarmes so gewählt sind, daß der Schöpfbecher bei Betätigung des Hebels einen möglichst langen Weg durch die Flüssigspeise zurücklegt.

Der Erfindung liegt die Aufgabe zugrunde, eine Vorrichtung zu schaffen, mit der Flüssigspeisen, insbesondere solche mit festen Bestandteilen (wie Zwiebelstücke, Petersilie, Kräuter, körniger Pfeffer, Kümmel und andere körnige Gewürze, sowie kleingeschnittene Früchte, Eier, Käse, Wurst, Kartoffeln, Gemüse, Fleisch, Klöße etc.), unter gleichmäßiger Verteilung der festen Bestandteile portioniert werden können. Dieser Vorgang muß so erfolgen, daß die sich stets absetzenden oder sich in der Flüssigkeit oben ansammelnden, schwimmenden Stücke bzw. festen Bestandteile bei jedem Schöpfvorgang aufgewirbelt und gleichmäßig verteilt werden. Die Portionierung muß hygienisch vertretbar von jedermann ausführbar sein, unabhängig davon, ob es sich um kalte bzw. heiße Flüssig-Speisen handelt.

Diese Aufgabe wird erfindungsgemäß dadurch gelöst, daß der Schöpfbecher zur Verwirbelung und Verteilung von in der Flüssigspeise enthaltenen festen Bestandteilen eine kantige Form hat und an seiner größten Seite offen ist, daß die Transportrutsche eine Auslaufrinne ist, die getrennt von dem Schöpfbecher am Gehäuse angebracht ist, und daß das Gehäuse einen durch die Rückwand herausnehmbaren Behälter zur Aufnahme der Flüssigspeise enthält.

Zweckmäßigerweise ist der Schöpfbecher in Dreieckform ausgeführt. Bei jedem Schöpfvorgang wird durch diese Dreieckform unter Vermeidung von Rundungen der sich zum Absetzen oder Aufschwimmen neigende feste Speiseanteil mit flüssigen Anteilen immer wieder durchmischt und damit gleichmäßig dosiert.

Der Schöpfbecher ist zweckmäßigerweise an dem Schöpfarm im Winkel verstellbar. Hierdurch kann die Dosiermenge variiert werden, auch unter Berücksichtigung der unterschiedlichen Fließeigenschaften des Schöpfgutes bzw. von dessen Viskosität.

Gemäß einer bevorzugten Ausführungsform ist die Laufrinne an dem Gehäuse im Winkel verstellbar angeordnet. Durch diese Winkelverstellung kann die Fließgeschwindigkeit des Schöpfgutes der Viskosität der Flüssigkeit und der Größe der Festbestandteile angepaßt werden.

Eine weitere Ausgestaltung der Erfindung sieht vor, daß die Welle an einem von dem Gehäuse nach vorne vorstehenden Kopfstück gelagert ist und daß der Schöpfarm derart abgewinkelt ist, daß sein Unterteil im Ruhezustand senkrecht herabhängt. Hierdurch wird ein langer Weg des Schöpfbechers durch die Flüssigspeise hindurch erreicht, so daß sich am Boden absetzende Festbestandteile aufgewirbelt und verteilt werden.

Der erfindungsgemäße Flüssigspeisenspender ist wartungsfrei, leicht zu reinigen und hygienisch einwandfrei.

Im folgenden wird anhand der Zeichnungen ein Ausführungsbeispiel der Erfindung näher erläutert.

Es zeigen :

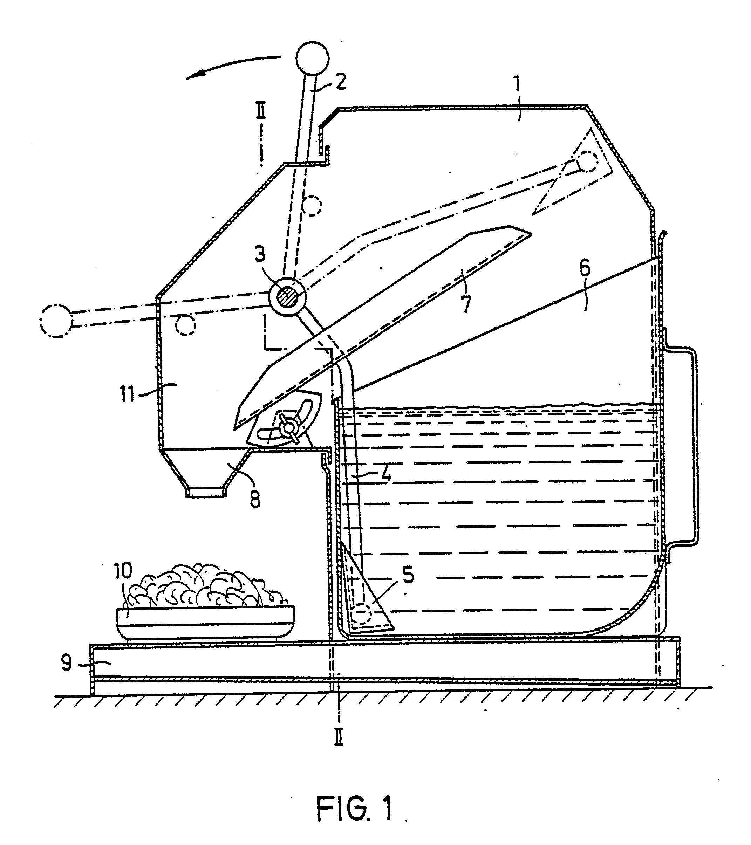

Figur 1 einen schematischen Längsschnitt durch den Flüssigspeisenspender, und

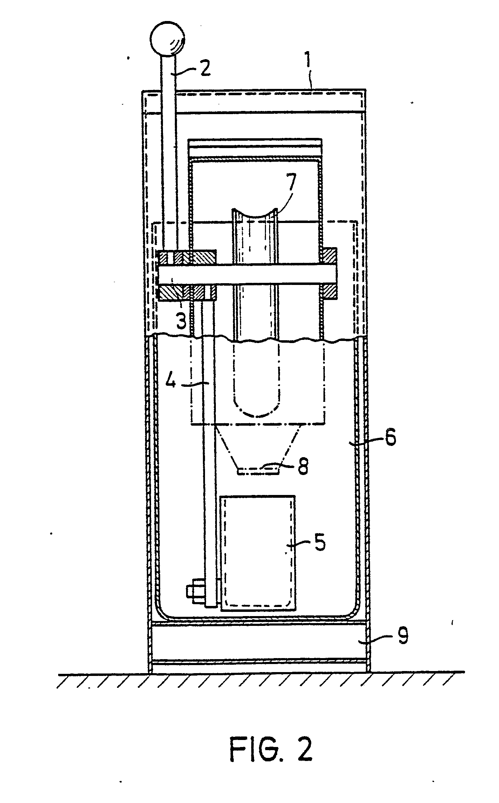

Figur 2 einen Schnitt entlang der Linie II-II aus Fig. 1.

Das Gerät besteht aus einem Gehäuse 1 mit einem von hinten einschiebbarem Flüssigspeisenbehälter 6. In dem aufrecht stehenden Gehäuse 1 ist im oberen Drittel eine Welle 3 angebracht, die auf einer Seite durch die Behälterwand hindurchgeht. An dem außenliegenden Wellenende ist seitlich ein Betätigungshebel 2 angebracht. Im Innern des Gehäuses 1 ist auf der Welle 3 ein nach oben bzw. nach unten schwenkbarer Schöpfarm 4 außermittig fest angebracht, der in Ruhestellung senkrecht nach unten hängt. Die Welle 3 befindet sich in einem von dem Gehäuse nach vorne vorstehenden Kopfstück 11, das zu Reinigungszwecken abgenommen werden kann. Der Schöpfarm 4 ist abgewinkelt, so daß sein Unterteil im Ruhezustand senkrecht in den von der Rückseite her in das Gehäuse 1 eingeschobenen Behälter hineinhängt. Am unteren Ende des Schöpfarmes 4 ist ein Schöpfbecher 5 in Gefäßmitte durch Anschrauben befestigt. Durch Lösen der Befestigungsschraube kann die Winkelstellung des Schöpfbechers 5 verändert werden. In der Mittelebene des Schöpfbechers bzw. des Gefäßes ist ein Auffangrohr/ bzw. -rinne 7 angeschraubt, dessen Öffnung im oberen Behälterteil liegt, jedoch unterhalb der höchsten Stellung des schwenkbaren Schöpfbechers 5. Im unteren Teil ist das Auffangrohr 7 an der vorderen Behälterwand angeschraubt. Durch Lösen der Befestigungsschraube kann die Winkelstellung des Auffangrohres 7 verändert werden. Die untere Öffnung des Auffangrohres 7 mündet über einem Auslauf 8. Der Auslaufdurchmesser ist verstellbar je nach Art der Speise. Unter dem Auslauf 8 und dem Gehäuse 1 befindet sich ein Telleraufsatz 9, der als Tropfwanne ausgebildet ist, auf den der Teller 10 senkrecht unter dem Auslauf 87 aufgesetzt wird.

Der erfindungsgemäße Flüssigkeitsspender arbeitet wie folgt : Das Schöpfgut bzw. die Flüssigspeise mit festen Bestandteilen wird in das Gefäß 6 gefüllt und dieses wird in das Gehäuse 1 geschoben. Nach dem Aufsetzen des Tellers 10 auf die Tropfwanne 9 wird der Betätigungshebel 2 in Pfeilrichtung gezogen. Der auf der gleichen Welle 3 angebrachte Schöpfarm 4, dessen Schöpfbecher in der Ruhestellung dicht über dem Behälterboden angeordnet ist, bewegt sich dabei nach oben, rührt das Schöpfgut auf, nimmt eine einstellbare Menge Schöpfgut und feste Bestandteile mit und kippt diese bei Erreichen der vorgesehenen Höhe in die Auffangrinne 7. Der Schöpfbecher befindet sich im Ruhezustand dicht über dem Behälterboden und gelangt beim Hochschwenken in nahezu waagerechter Stellung vorübergehend in engem Abstand zur Behälterrückwand. Dadurch wird erreicht, daß der Schöpfbecher 5 einen langen Weg durch die Flüssigspeise nimmt.

Der Schöpfbecher 5 hat die Form eines prismatischen Behälters, der an seiner größten Seite offen ist und in Seitenansicht ein rechtwinkliges Dreieck bildet. Im Ruhezustand liegt der kürzeste Schenkel des Dreiecks parallel zum Boden und der längere Schenkel parallel zur Vorderwand des Flüssigspeisenbehälters. Durch die kantige Form des Schöpfbechers hat dieser einen großen Strömungswiderstand und bewirkt bei seiner Bewegung eine starke Verwirbelung und damit eine gleichmäßige Verteilung der festen Bestandteile in der Flüssigspeise. Das Schöpfgut fließt dann über den Auslauf 8, dessen Durchmesser dem jeweiligen Produkt angepaßt wird, in den Teller 10.

Ein wichtiger Anwendungsfall für den Flüssigspeisenspender ist das Selbstschöpfen von Salatsoßen mit festen Bestandteilen (Zwiebeln, Körner u. a. Gewürze). Ebenfalls kann das Gerät für ein hygienisch einwandfreies Selbstschöpfen von Suppen und Soßen in Großkantinen eingesetzt werden.

## Patentansprüche

1. Flüssigspeisenspender für die Abgabe einer definierten Menge Flüssigspeise, mit einem die Flüssigspeise aufnehmenden Gehäuse (1), in welchem eine Welle (3) gelagert ist, an der ein Schöpfarm (4) mit einem Schöpfbecher und einem außenliegenden Betätigungshebel angebracht ist, und mit einer über einem Auslauf (8) endenden Transportrutsche, in die sich der Inhalt des Schöpfbechers (5) entleert, wobei die Länge und Form des Schöpfarmes (4) so gewählt sind, daß der Schöpfbecher (5) bei Betätigung des Hebels (2) einen möglichst langen Weg durch die Flüssigspeise zurücklegt, dadurch gekennzeichnet, daß der Schöpfbecher (5) zur Verwirbelung und Verteilung von in der Flüssigspeise enthaltenen festen Bestandteilen eine kantige Form hat und an seiner größten Seite offen ist, daß die Transportrutsche eine Auslaufrinne (7) ist, die getrennt von dem Schöpfbecher (5) am Gehäuse (1) angebracht ist, und daß das Gehäuse (1) einen durch die Rückwand herausnehmbaren Behälter (6) zur Aufnahme der Flüssigspeise enthält.

2. Flüssigspeisenspender nach Anspruch 1, dadurch gekennzeichnet, daß der Schöpfbecher (5) in Dreieckform ausgeführt ist.

3. Flüssigspeisenspender nach Anspruch 1 oder 2, dadurch gekennzeichnet, daß der Schöpfbecher (5) an dem Schöpfarm (4) im Winkel verstellbar ist.

4. Flüssigspeisenspender nach einem der Ansprüche 1 bis 3, dadurch gekennzeichnet, daß die Auslaufrinne (7) an dem Gehäuse (1) im Winkel verstellbar angeordnet ist.

5. Flüssigspeisenspender nach einem der Ansprüche 1 bis 4, dadurch gekennzeichnet, daß die Welle (3) an einem von dem Gehäuse (1) nach vorne vorstehenden Kopfstück (11) gelagert ist und daß der Schöpfarm (4) derart abgewinkelt ist, daß sein Unterteil im Ruhezustand senkrecht herabhängt.

**Claims**

1. Liquid food dispenser for dispensing a defined amount of liquid food, comprising a housing (1) receiving the liquid food and in which a shaft (3) is supported at which a scoop arm (4) with a cup and an external actuation lever is mounted and a feeder chute ending above an outlet (8) and into which the content of the cup (5) is evacuated, the length and the shape of the scoop arm (4) being so designed that, upon actuation of the lever (2) the cup (5) is displaced through the liquid food over a distance as long as possible, characterized in that the cup (5) is edge-shaped for whirling and distributing solid components contained in the liquid food, its largest side being open, that the feeder chute is a discharge channel (7) fitted at the housing (1) and separately from the cup (5), and that the housing includes a container (6) removable through the rear wall to receive the liquid food.

2. Liquid food dispenser according to claim 1, characterized in that the cup (5) is of a triangular shape.

3. Liquid food dispenser according to claim 1 or 2, characterized in that the cup (5) is angularly adjustable at the scoop arm.

4. Liquid food dispenser according to one of claims 1 to 3, characterized in that the discharge channel (7) at the housing (1) is mounted to be angularly adjustable.

5. Liquid food dispenser according to one of claims 1 to 4, characterized in that the shaft (3) is supported at a head portion (11) projecting forwardly from the housing (1) and that the scoop arm (4) is bent so that its lower part hangs down vertically in rest condition.

**Revendications**

1. Distributeur d'aliment liquide destiné à délivrer une quantité définie d'aliment liquide comprenant un carter (1) recevant l'aliment liquide dans lequel est positionné un arbre (3) sur lequel est fixé un bras de puisage (4) muni d'un godet de puisage et d'un levier de manœuvre situé à l'extérieur, et comprenant une glissière de transport se terminant au-dessus d'une sortie (8), glissière dans laquelle se vide le contenu du godet de puisage (5), la longueur et la forme du bras de puisage (4) étant choisies de telle manière que le godet de puisage (5) parcourt un trajet aussi long que possible dans l'aliment liquide lorsque le levier (2) est actionné, caractérisé par le fait que le godet de puisage (5) a une forme à arêtes vives afin de mélanger et répartir les composants solides contenus dans l'aliment liquide et est ouvert sur son côté le plus grand, par le fait que la glissière de transport est une goulotte d'écoulement (7) qui est fixée sur le carter (1) en position séparée du godet de puisage (5) et par le fait que le carter (1) contient un récipient (6) destiné à recevoir l'aliment liquide et pouvant être extrait à travers la paroi arrière du carter.

2. Distributeur d'aliment liquide selon la revendication 1, caractérisé par le fait que le godet de puisage (5) est de forme triangulaire.

3. Distributeur d'aliment liquide selon la revendication 1 ou 2, caractérisé par le fait que la position angulaire du godet de puisage (5) par rapport au bras de puisage (4) est réglable.

4. Distributeur d'aliment liquide selon l'une des revendications 1 à 3, caractérisé par le fait que l'angulation de la goulotte d'écoulement (7) par rapport au carter (1) est réglable.

5. Distributeur d'aliment liquide selon l'une des revendications 1 à 4, caractérisé par le fait que l'arbre (3) est positionné sur une pièce creuse (11) faisant saillie vers la partie antérieure du carter (1) et par le fait que le bras de puisage (4) présente une angulation telle que sa partie inférieure pend verticalement vers le bas lorsqu'il est au repos.

FIG. 1

FIG. 2